(19) Europäisches Patentamt / European Patent Office / Office européen des brevets

(11) **EP 4 527 686 A1**

(12) **EUROPEAN PATENT APPLICATION**
published in accordance with Art. 153(4) EPC

(43) Date of publication:
**26.03.2025 Bulletin 2025/13**

(21) Application number: **23819461.7**

(22) Date of filing: **16.03.2023**

(51) International Patent Classification (IPC):
**B60N 2/427** (2006.01)   **B60N 2/22** (2006.01)

(52) Cooperative Patent Classification (CPC):
**B60N 2/22; B60N 2/427**

(86) International application number:
**PCT/JP2023/010476**

(87) International publication number:
**WO 2023/238474 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.06.2022   JP 2022093328**

(71) Applicant: **Autoliv Development AB
44783 Vargarda (SE)**

(72) Inventors:
• **SAITO Hiroyuki
  Yokohama-shi, Kanagawa 222-8580 (JP)**
• **MAKIOKA Takayuki
  Yokohama-shi, Kanagawa 222-8580 (JP)**

(74) Representative: **Poindron, Cyrille
Novagraaf International SA
Chemin de l'Echo 3
1213 Onex (CH)**

(54) **SAFETY DEVICE FOR VEHICLE SEAT**

(57)    To provide a vehicle seat safety device capable of preventing distortion of a seat back in the width direction when a vehicle collision occurs, thereby appropriately restraining an occupant. RESOLUTION MEANS
The present invention relates to a vehicle seat safety device that is provided with a reclining mechanism enabling adjustment of the angle of a seat back and protects an occupant seated in the vehicle seat. The seat belt extends diagonally from an upper end part of a first side in the width direction of the seat back to a lower end of a second side on an opposite side of the first side. A rotation shaft part, which serves as an axis when the seat back is reclined, is provided with an adjustment means for varying the amount of rotation of the first side and the second side of the seat back in the event of a vehicle collision.

FIG. 4

**Description**

**TECHNICAL FIELD**

The present invention relates to a vehicle seat safety device. In particular, the present invention relates to an automobile seat safety device equipped with a seat belt retractor and having an integrated retractor.

**BACKGROUND ART**

Automobiles are equipped with seat belts to restrain occupants in their seats. Mainstream seat belts are three-point seat belts that extend diagonally downward from near one of the occupant's shoulders and horizontally near the hip bones. In addition, recent automobiles are equipped with a retractor that automatically retracts seat belts immediately before and/or after a collision occurs.

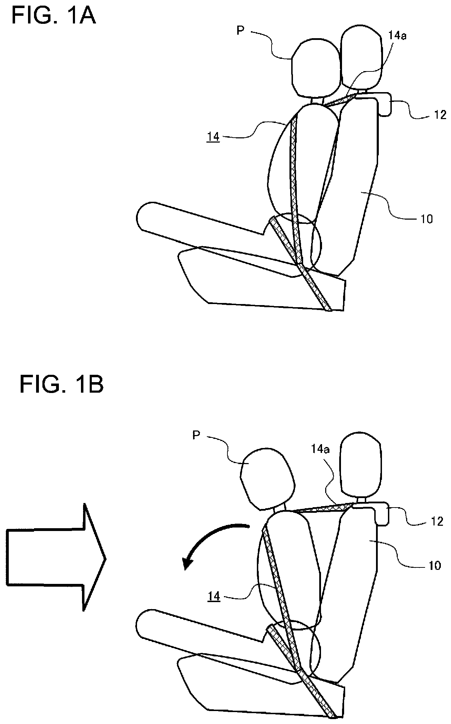

Patent Document 1 discloses a retractor-integrated automobile seat in which a seat belt retractor is provided on the seat back. In a seat with an integrated retractor, for example, as depicted in FIG. 1(A), a seat belt retractor 12 is arranged at an upper end of a seat back 10, and an upper end 14a of a seat belt 14 extends from above the shoulder of an occupant P. Since the retractor is positioned close to the shoulder of the occupant, there is little space between the shoulder of the occupant and the seat belt 14, which has the advantage of enabling the occupant to be securely restrained against the seat back 10.

Generally, when a frontal collision occurs with the seat back 12 in a nearly vertical position as depicted in FIG. 1(A), the occupant P will fall forward due to inertia as depicted in FIG. 1(B). At this time, a pretension function of the seat belt retractor 12 can prevent the occupant P from excessively leaning forward.

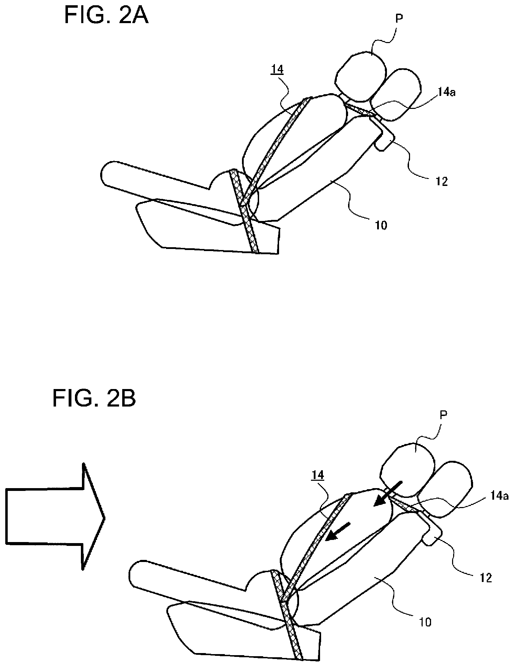

Automobile seats are equipped with a reclining mechanism that enables the seat back to be tilted backward or raised forward. As depicted in FIG. 2(A), if a frontal collision occurs with the seat back 10 tilted backward (laying down), a compressive force will be applied to the spine of the occupant P from the head to the lower back, as indicated in FIG. 2(B), which may cause serious injury. This problem becomes more pronounced in seats with an integrated retractor. Note that in the case of seats in which the retractor is secured to the B-pillar, a gap is formed between the top of the seat belt and the shoulder of the occupant when the seat back is reclined, so they cannot be discussed in the same manner as seats with an integrated retractor, but compression of the spine is still a cause for concern.

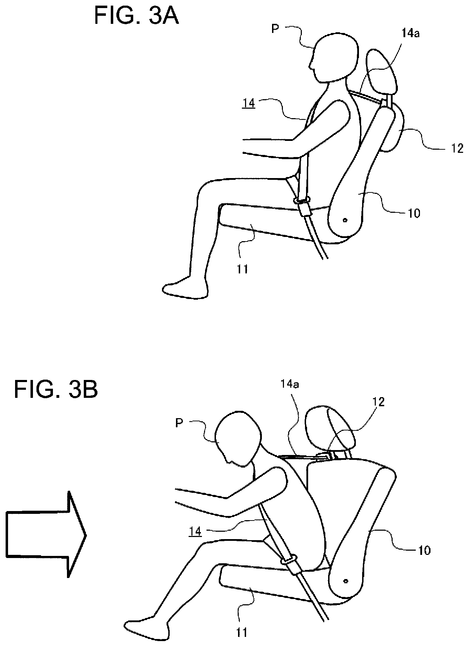

Incidentally, when a frontal collision (such as a head-on collision) occurs while the seat belt is fastened, as depicted in FIG. 3(B), the side of the seat back 10 where the upper end 14a of the seat belt 14 is located (right side) is more likely to tilt forward than the opposite side (left side). This is because the shoulder of the occupant P on the right side of the seat back 10 is pressed against the seat back 10 by the seat belt 14, and the seat back 10 and the right shoulder of the occupant P are in close contact with each other. In this manner, the seat back 10 will become twisted or deformed (distorted), making it difficult to properly restrain the occupant P.

**RELATED ART DOCUMENTS**

**Patent Documents**

Patent document 1 Japanese Unexamined Patent Application Publication 2002-283892

**SUMMARY OF THE INVENTION**

**PROBLEM TO BE SOLVED BY THE INVENTION**

In order to resolve the problems described above, an object of the present invention is to provide a vehicle seat safety device that can prevent distortion (twisting) in the width direction of the seat back in the event of a vehicle collision, thereby properly restraining the occupant.

Another object of the present invention is to provide a vehicle seat safety device that can reduce compressive pressure on the occupant's spine in the event of a vehicle collision.

**MEANS FOR SOLVING THE PROBLEM**

The present invention relates to a vehicle seat safety device that is provided with a reclining mechanism enabling adjustment of the angle of a seat back and protects an occupant seated in the vehicle seat. The seat belt extends diagonally from an upper end part of a first side in the width direction of the seat back to a lower end of a second side on an opposite side of the first side. A rotation shaft part, which serves as an axis when the seat back is reclined, is provided with an adjustment means for varying the amount of rotation of the first side and the second side of the seat back in the event of a vehicle collision.

Here, the "first side in the width direction of the seat back" and the "second side" can be said to be the left and right sides of the occupant when the occupant is seated in a normal position facing forward. In addition, when the seat faces the traveling direction (front), the left and right sides of the seat back facing the traveling direction can be referred to.

In addition, the indication that "the seat belt extends diagonally from an upper end part of a first side in the width direction of the seat back to a lower end of a second side opposite the first side" applies to at least a typical three-point seat belt.

In addition, the "rotation shaft part of the seat back that serves as the axis when reclining" refers to the portion at the lower end part of the seat back that is connected to the reclining mechanism and serves as the axis for rotating the seat back. For example, this may be a circular hole formed in the seat back frame, a portion connected to the hole, or a shaft-like rod that passes through the hole and is connected to the left and right seat back frames.

With the present invention, examples of "adjustment means for varying the amount of rotation of the first side and the second side of the seat back in the event of a vehicle collision" include providing a torsion bar, which will be described later, on the rotation shaft part, setting the rigidity of the seat frame (seat back frame, seat side frame, and the like) differently in the width direction of the seat back, and providing a member such as a stopper that restricts the rotation of the seat back on one side in the width direction of the seat back.

With the present invention, by making it possible to vary the amount of rotation of the first and second sides of the seat back in the event of a vehicle collision, twisting (distortion) that occurs in the width direction of the seat back when a force is applied in the direction that causes the seat back to tilt forward due to inertia can be suppressed. As a result, the occupant can be restrained in a well-balanced manner, and the occupant restraint performance is significantly improved. In particular, the rotational component of the occupant's head in the Z direction (relative to the vertical axis) is reduced, which contributes to reducing head injuries. Furthermore, the rebound behavior of the occupant after a collision is suppressed, which results in a reduction in the risk of a secondary collision inside the vehicle.

The adjusting means may include a second torsion bar connected to the rotation shaft part on at least the second side of the seat back.

Here, "connected" to the rotation shaft part means a state in which the member is continuously joined coaxially with the rotation shaft part and can rotate integrally therewith. Additionally, the "rotation shaft part" can be specified as the end part of the torsion bar that passes through the hole formed in the seat back frame.

By connecting a second torsion bar to the second side of the seat back, the second side of the seat back can be caused to lean forward (readily rotate) more easily than the first side in the event of a vehicle collision, thereby suppressing twisting of the seat back in the width direction.

The adjusting means may further include a first torsion bar connected to the rotation shaft part on the first side of the seat back. Furthermore, the torque characteristic T1 (N-m) relative to the displacement angle of the first torsion bar is preferably set to be greater than the torque characteristic T2 (N-m) relative to the displacement angle of the second torsion bar.

Here, the "torque characteristic with respect to the displacement angle" represents the difficulty (ease) of twisting of the torsion bar. If the torque characteristic is high, the torsion bar does not readily twist, and if the torque characteristic is low, the torsion bar will readily twist. The "displacement angle" can also be called the "torsion angle". The torque characteristics of a torsion bar can be adjusted by changing the thickness and length of the bar, or by changing the material of the bar.

Note that in the case of a round torsion bar, the "torque characteristics with respect to the displacement angle" is roughly synonymous with "torsional rigidity", and if the torsional rigidity is high, twisting is difficult, and if the torsional rigidity is small, twisting is easy.

If a vehicle collision occurs with the seat back tilted backward, a large compressive pressure is applied to the spine of the occupant, as indicated in FIG. 2(B). However, according to the present invention, a torsion bar is connected to both the left and right sides of the rotation shaft part of the seat back, so that even when the seat back is laying down, the torsion bar twists (absorbs energy) and the seat back moves forward towards an upright direction. This significantly reduces compressive pressure on the spine of the occupant.

If the torsional rigidity of the torsion bar on both the left and right sides are the same, the seat back would be tilted significantly forward on the first side where the seat belt comes into contact with the occupant's shoulder, as depicted in FIG. 3(B). If this happens, the seat back will become twisted or deformed (distorted), causing the body of the occupant to rotate in a direction such that the right side (right shoulder, and the like) moves more forward, making it difficult to properly restrain the occupant. For example, the rotational component of the occupant's head in the Z direction (relative to the vertical axis) increases, raising concerns about the occurrence of head injuries.

In the present invention, the torque characteristic T1 (N-m) relative to the displacement angle of the first torsion bar is set to be greater than the torque characteristic T2 (N-m) relative to the displacement angle of the second torsion bar, so that the first torsion bar is less likely to twist, and the above-mentioned twisting of the seat back in the vehicle width direction during a vehicle collision is suppressed. As a result, the occupant restraint performance is improved. In particular, the rotational component of the occupant's head in the Z direction (relative to the vertical axis) is reduced, which contributes to reducing head injuries. Furthermore, the rebound behavior of the occupant after a collision is suppressed, which results in a reduction in the risk of a secondary collision inside the vehicle.

The vehicle seat may further include a seat belt retractor for retracting the seat belt.

Here, "equipped with a seat belt retractor" does not include cases where the retractor is secured to a structural part of the vehicle such as a pillar, and means that the retractor is arranged and secured somewhere on the seat. The location may be the top or bottom of the seat back, or the like, which does not affect the withdrawal or retraction of the seat belt.

The seat belt retractor may be arranged near the upper end of the first side of the seat back.

If the seat belt retractor is provided at the upper end of the seat back, the weight of the retractor causes the first side of the seat back to more readily move forward, making it even more meaningful to employ a torsion bar with appropriately adjusted torque characteristics as in the present invention. Note that the seat belt retractor can be installed near the lower part of the back surface of the seat back in addition to at the upper end of the seat back. In this case, a member for guiding the seat belt at the upper end of the seat back must be provided.

The seatbelt retractor may include a load limiter that limits the tension on the seatbelt and the load at which the load limiter activates is set to $F_L$. The load limiter may be configured such that the following formula holds when the distance from the center of the rotation shaft part to the upper end part of the seat back when viewing the seat from the side in the width direction is set to L and the difference of the torque characteristics T1 and T2 is set to $\Delta T_{barl-II}$.

$$\Delta T_{barl-II} \fallingdotseq F_L \times L \ (1)$$

The distance L may be the distance from the center of the rotation shaft part to the belt pull-out portion of the retractor.

Here, "$\fallingdotseq$" means roughly equal.
The load $F_L$ at which the load limiter operates can be set to, for example, 2 kN to 5 kN.

In the event of a frontal collision, the seat belt restrains the occupant, but the load limiter begins to operate when the seat belt reaches a certain level of tension. In the aspect described above, since the seat belt retractor is provided on the first side of the seat back, a moment represented by the product ($F_L \times L$) of the load $F_L$ when the load limiter is activated and the distance L from the rotation shaft part on the first side of the seat back to the belt pull-out portion is applied to the rotation shaft part on the first side of the seat back. Therefore, by roughly matching this moment ($F_L \times L$) with the difference ($\Delta T_{barl-II}$) between the torque T1 of the first torsion bar and the torque T2 of the second torsion bar, the torque difference between the first and second sides of the seat back can be canceled out. This enables effective suppression of twisting of the seat back in the width direction.

A configuration where the reclining mechanism includes a worm gear mechanism composed of a worm wheel connected to an end part of the first or second torsion bar on the opposite side of the seat back and a worm that meshes with the worm wheel may be adopted.

When a worm gear mechanism composed of a worm wheel and a worm is adopted, the rotation of a worm shaft having a worm formed on the outer periphery thereof rotates the worm wheel via the worm, thereby enabling the seat back to recline. In the event of a vehicle collision, the worm shaft does not rotate, so the seat back cannot recline, and torque that would cause the seat back to tilt forward is absorbed by the torsion bar.

A configuration where the reclining mechanism includes a gear mechanism connected to an end part of the first or second torsion bar on the opposite side of the seat back, a locking mechanism that limits rotation of the gear mechanism, and an adjustment member that releases the engagement of the gear mechanism and the locking mechanism to adjust the angle of the seat back frame may be adopted.

By releasing the engagement between the gear mechanism and the locking mechanism with a lever, the seat back can move freely and can be reclined. In the event of a vehicle collision, the gear mechanism and the locking mechanism are engaged with each other, so the seat back cannot be reclined, and torque that would cause the seat back to tilt forward is absorbed by the torsion bar.

## BRIEF DESCRIPTION OF THE DRAWINGS

FIG. 1 is a side view for describing the background of the present invention, in which (A) depicts a state before a vehicle collision and (B) depicts a state immediately after a vehicle collision.
FIG. 2 is a side view for describing the background of the present invention, in which (A) depicts a state before a vehicle collision and (B) depicts a state immediately after a vehicle collision.
FIG. 3 is a side view (perspective view) for describing the background of the present invention, in which (A) depicts a state before a vehicle collision and (B) depicts a state immediately after a vehicle collision.
FIG. 4 is a perspective view depicting a frame structure and a safety device of the vehicle seat according to Embodiment 1 of the present invention.
FIG. 5 is a perspective view depicting a power unit of a reclining mechanism applicable to the present invention.
FIG. 6 is a perspective view depicting the structure of a safety device according to Embodiment 1 of the present invention, and depicts an enlarged portion of FIG. 4.
FIG. 7 is a top view depicting the structure of a safety device according to Embodiment 1 of the present invention, where (A) corresponds to the right side of a seat and (B) corresponds to the left side of the seat.
FIG. 8 is an exploded perspective view depicting the structure of a safety device according to Embodiment 1 of the present invention, and corresponds to a part of FIG. 6.
FIG 9(A) and 9(B) are a schematic diagram (A) and a graph (B) for describing the configuration and characteristics of a safety device according to Embodiment 1 of the present invention.
FIG. 10 is a graph depicting another aspect of the characteristics of the safety device according to Embodiment 1.

FIG. 11(A) and 11(B) are perspective views depicting a reclining operation of the vehicle seat according to Embodiment 1 of the present invention.

FIG. 12 is a perspective view depicting the operation of the safety device according to Embodiment 1 of the present invention.

FIG. 13 is a side view for describing operation of the safety device according to Embodiment 1 of the present invention, in which (A) depicts a state before a vehicle collision and (B) depicts a state immediately after a vehicle collision.

FIG. 14 is a perspective view depicting the structure of a safety device according to Embodiment 2 of the present invention, which may be applied to a seat in which the reclining operation of the seat back is performed manually.

FIG. 15 is an exploded perspective view of the structure of FIG. 14.

FIG. 16 is a perspective view of the structure depicted in FIG. 14 and FIG. 15 in an assembled (completed) state.

FIG. 17 is an exploded perspective view depicting the structure of the safety device according to Embodiment 2 of the present invention, depicting the structure on the opposite side (right side) to that of FIG. 15 (left side).

FIG. 18 is a perspective view depicting an unlocking operation of the reclining mechanism of the vehicle seat according to Embodiment 2 of the present invention.

FIG. 19 is a side view depicting the unlocking operation of the reclining mechanism of a vehicle seat according to Embodiment 2 of the present invention, in which (A) depicts the locked state and (B) depicts the unlocked state.

## DESCRIPTION OF THE PREFERRED EMBODIMENTS

Hereinafter, embodiments of the present invention will be described in detail with reference to the accompanying drawings. First, the background on which the present invention was created will be briefly described with reference to FIG. 1 to FIG. 3.

FIG. 1(A) depicts a vehicle seat in which a seat belt retractor 12 for retracting a seat belt 14 is provided on a seat back 10, and an occupant P is seated in the seat with the seat back 10 not reclined very much. If an event such as a head-on collision occurs in this state, the occupant P moves in a direction falling forward due to inertia, as indicated in FIG. 1(B).

FIG. 2(A) depicts a state in which the seat back 10 is reclined backward extensively. When an event such as a head-on collision occurs in this state, unlike the case of FIG. 1B, the occupant P does not move significantly in the direction of falling forward, as shown in FIG. 2B. This is because the occupant P is restrained in a direction in which he or she is in close contact with the seat back 10 by the upper end portion 14a of the seat belt 14. As a result, compressive pressure is applied to the spine of the occupant P, which may result in serious injury.

Therefore, the present invention proposes a structure in which a torsion bar is connected to the seat reclining mechanism. In other words, the torsion bar is connected to the rotating shaft on both the left and right sides of the seat back.

FIG. 3(A) depicts the state of an occupant P normally seated on a seat cushion 11. If a vehicle collision occurs in this state, as depicted in FIG. 3 (B), the seat back 10 (10R) is likely to tilt significantly forward on the side (right side) where the upper end 14a of the seat belt 14 contacts the occupant P near his/her shoulder. If this occurs, the seat back 10 will become twisted or deformed (distorted), making it difficult to properly restrain the occupant P. The present invention is also for solving this manner of problem.

As depicted in FIG. 3(A), the present invention is a safety device for a vehicle seat that is equipped in a vehicle seat that includes a seat cushion 11 on which an occupant P sits, a seat back 10 positioned behind the occupant P, a reclining mechanism that can adjust the angle of the seat back 10, and the seat belt retractor 12 that retracts the seat belt 14. Furthermore, the seat belt 14 extends diagonally from the shoulder on a first side (right side) in the width direction of the seat back 10 toward the lower end on a second side (left side) opposite the first side. Note that the seat belt retractor 12 may be positioned in a location other than the upper part of the seat back 10, such as in the lower rear part of the seat back 10.

(Embodiment 1)

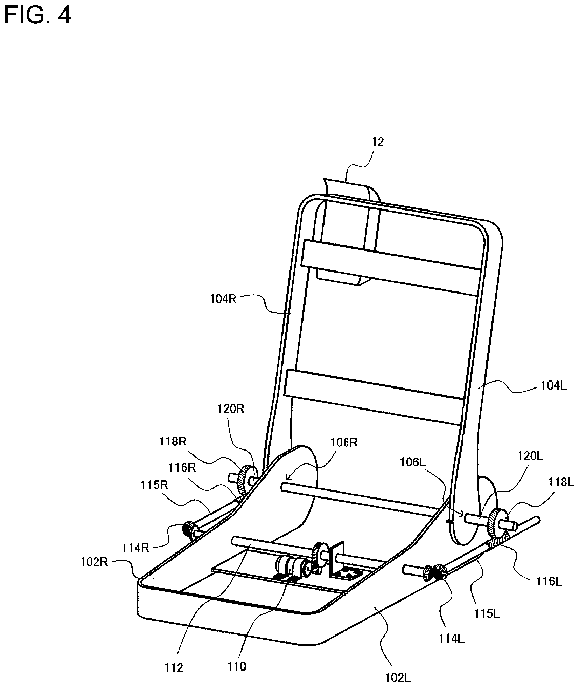

Embodiment 1 of the present invention will be described below with reference to FIG. 4 to FIG. 13. Embodiment 1 is applied to a vehicle seat in which reclining operation of the seat back is performed by utilizing power from a motor.

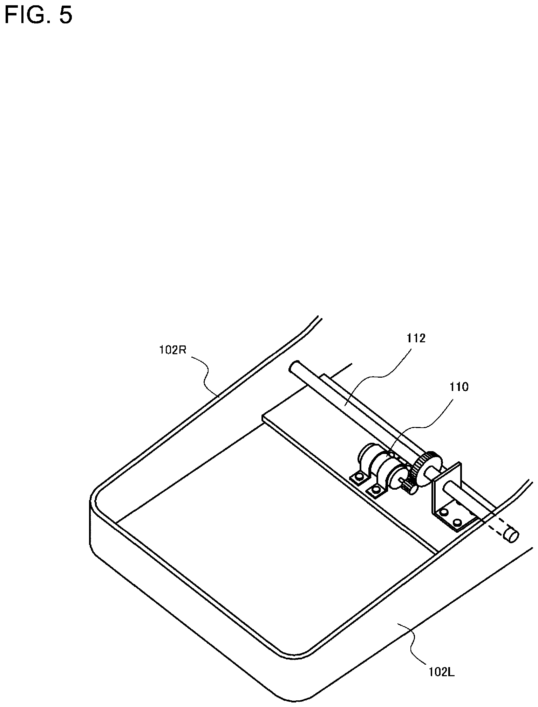

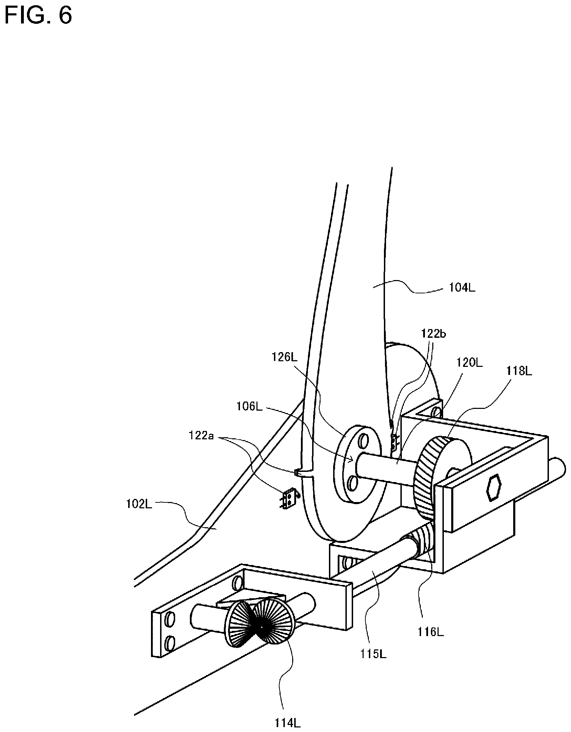

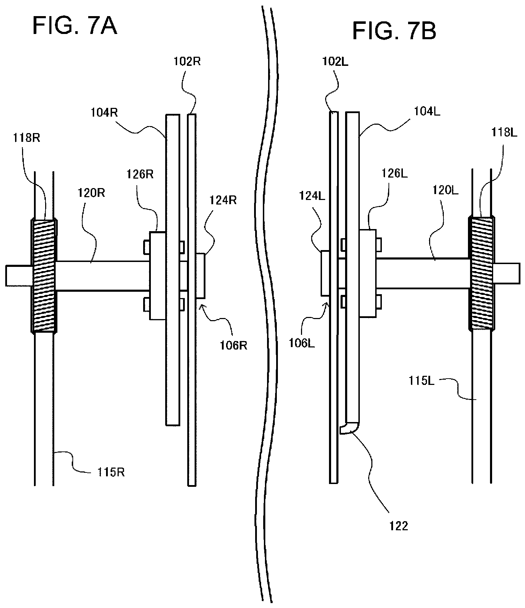

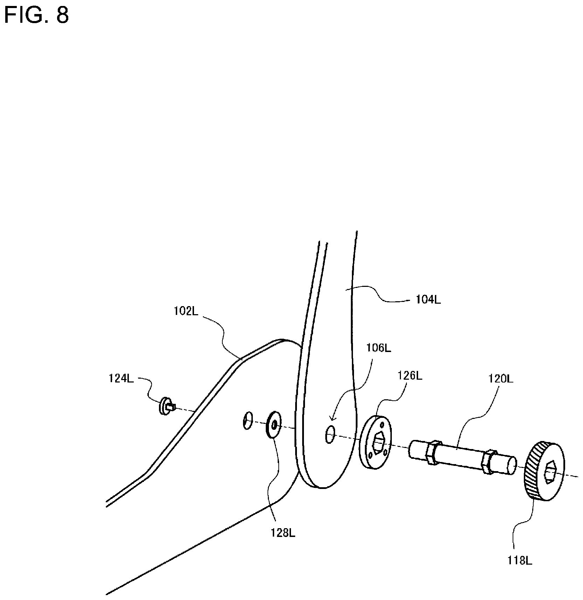

FIG. 4 is a perspective view depicting a frame structure and a safety device of the vehicle seat according to Embodiment 1 of the present invention. FIG. 5 is a perspective view depicting a power unit of a reclining mechanism applicable to the present invention. FIG. 6 is a perspective view depicting the structure of a safety device according to Embodiment 1 of the present invention, and depicts an enlarged portion of FIG. 4. FIG. 7 is a top view depicting the structure of a safety device according to Embodiment 1 of the present invention, where (A) corresponds to the right side of a seat and (B) corresponds to the left side of the seat. FIG. 8 is an exploded perspective view depicting the structure of the safety device according to Embodiment 1 of the present invention, and corresponds to a part of FIG. 6. In addition, in the reference numerals in each drawing, those marked with "R" basically indicate components provided on the right side of the seat back, and those marked with "L" basically indicate components provided on the left side.

As depicted in FIG. 4 to FIG. 8, the reclining mechanism includes a motor 110 and a center shaft 112 that transmits power from the motor 110. The power of the motor 110 is transmitted from a center shaft 112 to bevel gears 114L, 114R and worm shafts 115L, 115R. The rotation of the worm shafts 115L, 115R is transmitted to the rotating shafts 106L, 106R of the seat back frames 104L, 104R via worms 116L, 116R and worm wheels 118L, 118R formed thereon.

The rotating shafts 106L, 106R are portions that are connected to the reclining mechanisms at the lower ends of the seat back frames 104L, 104R, and circular holes formed in the seat back frames can be specified. Alternatively, a shaft-like rod may be inserted through the hole and connected to the left and right seat back frames. Furthermore, in the present Embodiment, they can also be specified as the ends of the torsion bars 120L, 120R provided to pass through holes formed in the seat back frame.

The safety device according to the present Embodiment includes a first torsion bar 120R connected to a first side (right side) of the seat back 10 and a second torsion bar 120L connected to a second side (left side) of the seat back 10. One end (inner end) of each of the first and second torsion bars 120R, 120L is secured to the seat back frames 104R, 104L on both the left and right sides. The other ends (outer ends) of the first and second torsion bars 120R, 120L are connected to the worm wheels 118R, 118L.

As depicted in FIG. 6 to FIG. 8, limit switches 122a, 122b are provided on the seat back frame 104L and the seat side frame 102L to restrict the forward reclining angle of the seat back 10 (seat back frames 104L, 104R). When the rotation angle of the seat back frames 104L, 104R reaching the limit is detected, measures such as stopping operation of the motor 110 are taken.

Note that the reference numerals 126R and 126L in the drawing denote connecting plates for securing the first and second torsion bars 120R and 120L to the seat back frames 104R and 104L. In addition, reference numerals 124R and 124L denote stoppers for preventing the first and second torsion bars 120R and 120L from coming off the seat side frames 102R and 102L. In addition, reference numeral 128L denotes a spacer disposed between the seat back frame 104L and the seat side frame 102L.

In the present invention, the torque characteristic T1 (N-m) relative to the displacement angle of the first torsion bar 120R is set to be greater than the torque characteristic T2 (N-m) relative to the displacement angle of the second torsion bar 120L.

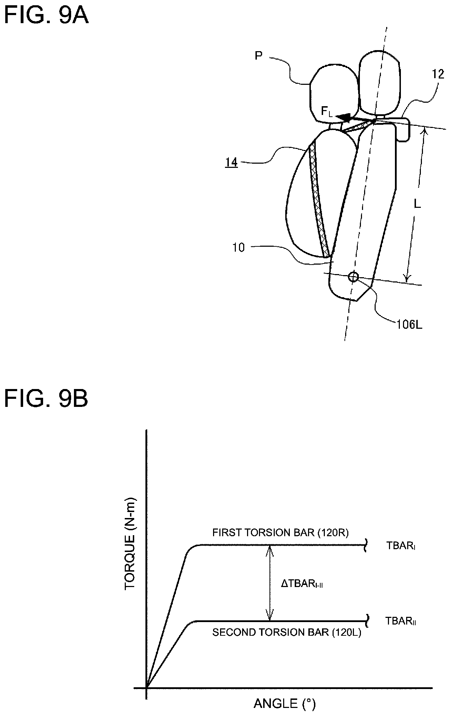

FIG. 9(A) and 9(B) are a schematic diagram (A) and a graph (B) for describing the configuration and characteristics of a safety device according to Embodiment 1 of the present invention. Note that FIG. 9B depicts the torque of the torsion bar relative to the rotation angle (displacement angle).

In the present Embodiment, the seat belt retractor 12 is equipped with a load limiter (not depicted) that limits the tension of the seat belt 14, and is set so that the following formula holds when the load at which the load limiter activates is $F_L$, the distance from the center of the rotating shafts 106L, 106R to the upper end part of the seat back 10 when viewed from the side in the width direction of the seat is L, and the difference between torques T1 and T2 is $\Delta T_{barI-II}$.

$$\Delta T_{barI-II} \fallingdotseq F_L \times L \ (1)$$

The load $F_L$ at which the load limiter operates can be set to 2 kN to 5 kN.

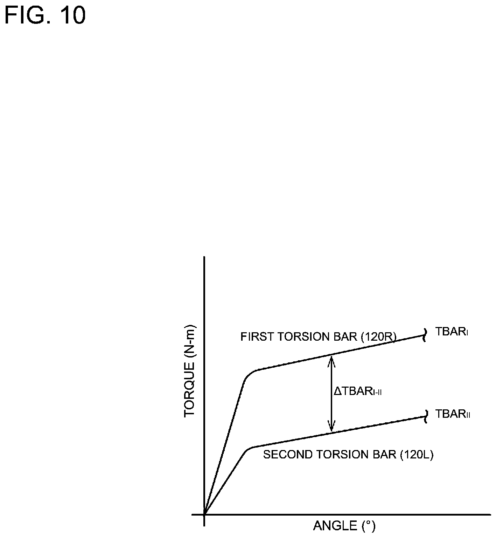

FIG. 10 is a graph depicting another aspect of the characteristics of the safety device according to the present invention. With the present invention, the torque characteristic T1 (N-m) with respect to the displacement angle of the first torsion bar 120R and the torque characteristic T2 (N-m) with respect to the displacement angle of the second torsion bar 120L can be set to gradually increase (progressively) with respect to the displacement angle.

(Reclining Mechanism Operation)

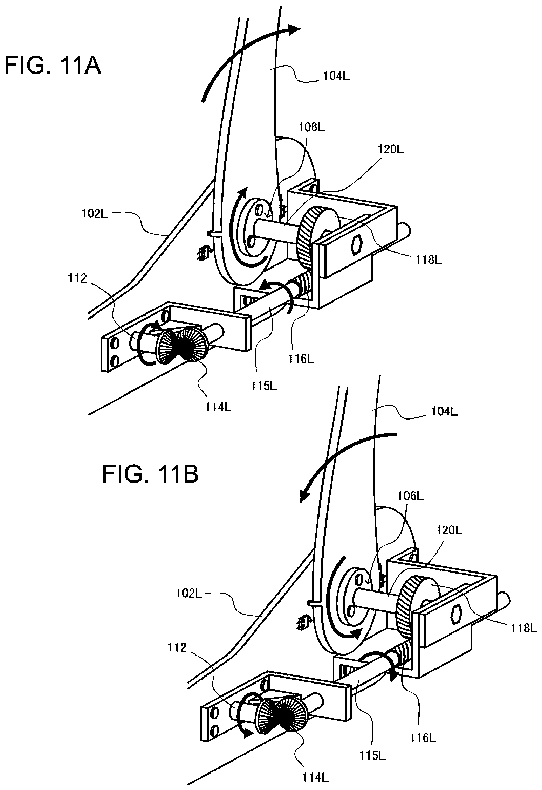

FIG. 11(A) and 11(B) are perspective views depicting a reclining operation of the vehicle seat according to Embodiment 1 of the present invention. When the seat back 10 is tilted backward, the power of the motor 110 is transmitted to the rotating shafts 106L, 106R of the seat back frames 104L, 104R via the center shaft 112, bevel gears 114L, 114R, worm shafts 115L, 115R, and worm gear mechanisms (116L, 118L, 116R, 118R), causing the seat back frames 104L, 104R to rotate (swing) backward, as depicted in FIG. 11 (A).

On the other hand, when the seat back 10 is tilted forward, the power of the motor 110 is transmitted to the rotating shafts 106L, 106R of the seat back frames 104L, 104R via the center shaft 112, bevel gears 114L, 114R, worm shafts 115L, 115R, and worm gear mechanisms (116L, 118L, 116R, 118R), causing the seat back frames 104L, 104R to rotate (swing) forward, as depicted in FIG. 11 (B).

(Safety Device Operation)

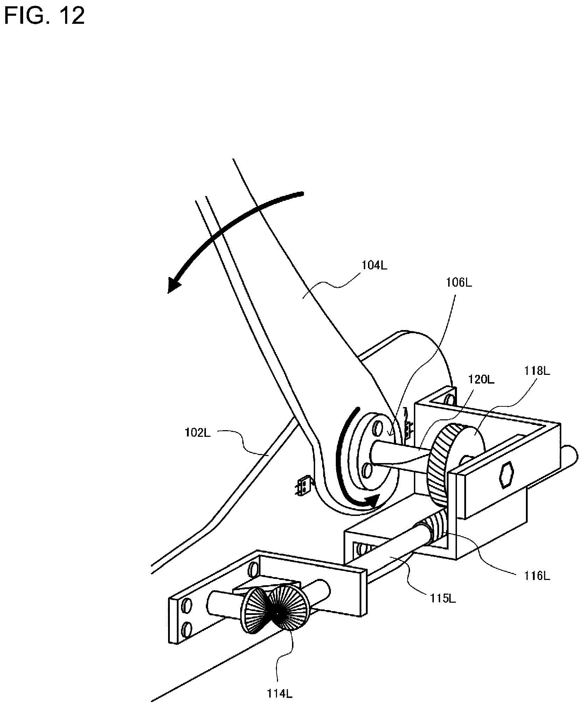

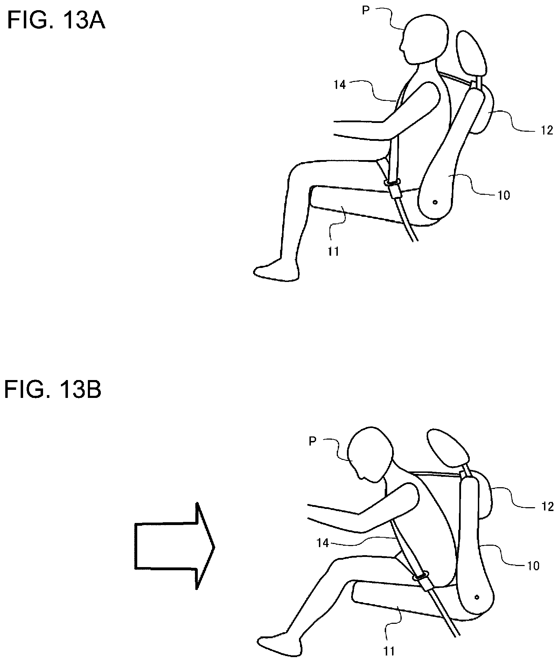

FIG. 12 is a perspective view depicting the operation of the safety device according to Embodiment 1 of the present invention. FIG. 13 is a side view for describing operation of the safety device according to Embodiment 1 of the present invention, in which (A) depicts a state before a vehicle collision and (B) depicts a state immediately after a vehicle collision.

As depicted in FIG. 13B, when a frontal collision of the vehicle occurs, the load limiter starts to operate at the point when tension exceeding a certain level is applied to the seat belt. At the same time, a force is applied to the seat back 10 in a direction in which the seat back 10 tilts forward due to inertia. At this time, the reclining mechanism does not function due to the meshing of the worms 116L, 116R with the worm wheels 118L, 118R, but as depicted in FIG. 12, the torsion bars 120L, 120R twist and absorb energy, causing the seat back 10 (seat back frames 104L, 104R) to rotate forward.

In this embodiment, the torque characteristic T1 (N-m) relative to the displacement angle of the first torsion bar 120R is set to be greater than the torque characteristic T2 (N-m) relative to the displacement angle of the second torsion bar 120L. Furthermore, the following formula holds when the load limiter load is set to $F_L$, the distance from the center of the rotating shaft portions 106L and 106R to the upper end part of the seat back 10 is set to L, and the difference between the torques T1 and T2 is set to $\Delta T_{barI-II}$.

$$\Delta T_{barI-II} \fallingdotseq F_L \times L \ (1)$$

With the present Embodiment, since the seat belt retractor 12 is provided on the first side (right side) of the seat back 10, a moment represented by the product $(F_L \times L)$ of the load $F_L$ when the load limiter is activated and the distance L from the rotation shaft part 106R on the first side of the seat back 10 to the belt pull-out portion is applied to the rotation shaft part 106R on the first side of the seat back 10. Therefore, by roughly matching this moment $(F_L \times L)$ with the difference $(\Delta T_{barI-II})$ between the torque T1 of the first torsion bar 120R and the torque T2 of the second torsion bar 120L, the torque difference between the first and second sides of the seat back 10 can be canceled out. This effectively suppresses twisting of the seat back 10 in the width direction, improving the occupant restraint performance.

(Embodiment 2)

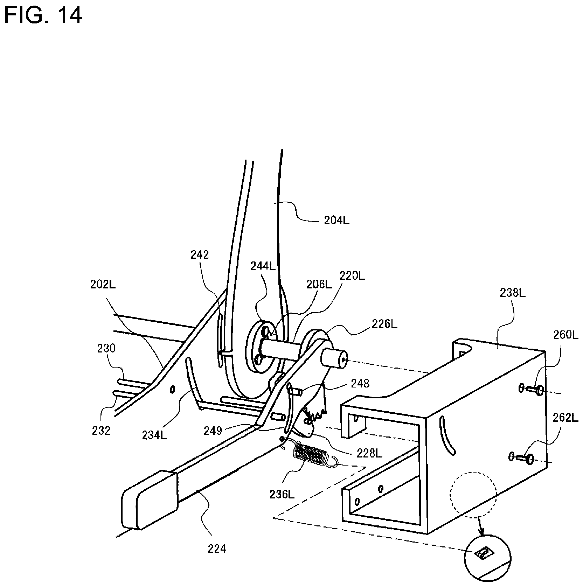

Embodiment 2 of the present invention will be described below with reference to FIG. 14 to FIG. 19. Embodiment 2 is applied to a vehicle seat in which the reclining operation of the seat back 10 is performed manually without using power from a motor. Note that for members corresponding to those in Embodiment 1 described above, the same numbers will be used as the last two digits whenever possible.

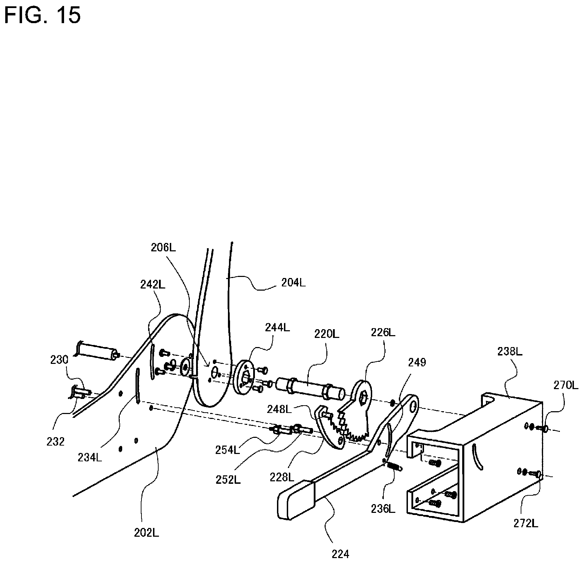

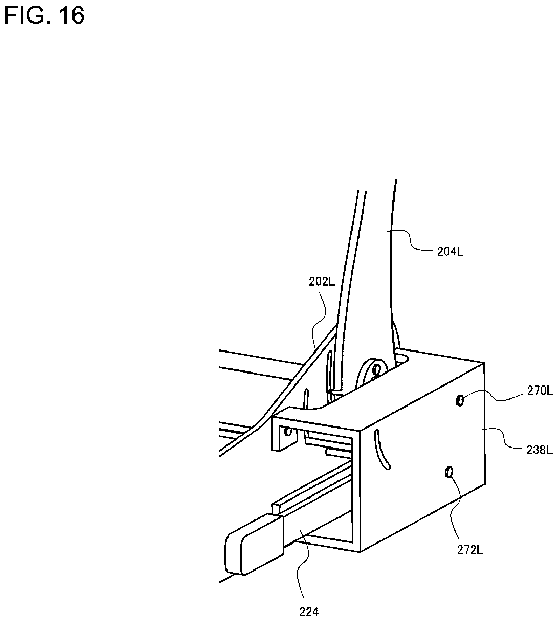

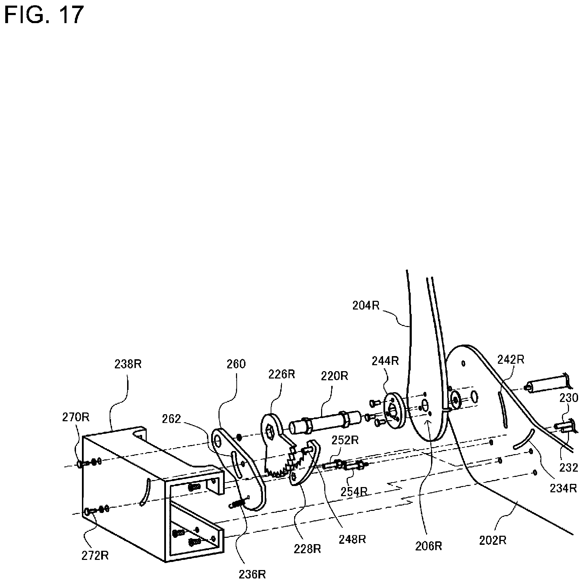

FIG. 14 is a perspective view depicting the structure of the safety device according to Embodiment 2 of the present invention. FIG. 15 is an exploded perspective view of the structure of FIG. 14. FIG. 16 is a perspective view of the structure depicted in FIG. 14 and FIG. 15 in an assembled (completed) state. FIG. 17 is an exploded perspective view depicting the structure of the safety device according to Embodiment 2 of the present invention, depicting the structure on the opposite side (right side) to that of FIG. 15 (left side).

The reclining mechanism of the present Embodiment includes gear members 226L, 226R connected to the rotation shaft parts 206L, 206R of the left and right seat back frames 204L, 204R via torsion bars 220L, 220R; lock plates 228L, 228R connected to both left and right ends of a lock plate shaft 230, and a lever 224 that releases the engagement between the gear members 226L, 226R and the lock plates 228L, 228R.

A lever guide shaft 232 is coupled to the lever 224 so as to move along the lever guide grooves 234L and 234R. A lock plate shaft 230 is coupled to the lock plates 228L, 228R so that the left and right lock plates 228L, 228R move synchronously. When the lever 224 is lifted upward, the engagement between the lock plates 228L, 228R and the gear members 226L, 226R is released. As a result, the seat back 10 is in a free state, and the reclining angle can be adjusted.

The safety device according to the present Embodiment, similar to Embodiment 1, includes a first torsion bar 220R connected to the seat back frame 204R and a second torsion bar 220L connected to the seat back frame 204L. First ends (inner end) of the first and second torsion bars 220R, 220L are secured to the seat back frames 204R, 204L on both the left and right sides via the rotation shaft parts 206L, 206R. Second ends (outer ends) of the first and second torsion bars 220R, 220L are connected to gear members 226R, 226L.

As depicted in FIG. 17, on the right side opposite the lever 224, a lever plate 260 that moves in synchronization with the lever 224 is provided. The main difference between the right side (FIG. 15) and the left side (FIG. 17) is that the lever 224 and the lever plate 260 have been interchanged.

Covers 238L, 238R are provided to cover the lever 224 and the lever plate 260, and the covers are provided with stoppers 270L, 270R for securing the end parts of the torsion bars 220L, 220R and stoppers 272L, 270R for securing the end of the lock plate shaft 230. A first end of springs 236L, 236R are connected to the lever 224 and the lever plate 260, and a second end of the springs 236L, 236R are connected to the covers 238L, 238R.

Note that the reference numerals 244R, 224L in the drawing denote connecting plates for securing the first and second torsion bars 120R and 120L to the seat back frames 104R and 104L. In addition, reference numeral 252L denotes a lever guard pin that is connected between the lever guide shaft 206 and the lever 224. In addition, reference numeral 252R denotes a lever guard pin that is connected between the lever guide shaft 206 and the lever plate 260. The reference symbols 254L and 254R denote lock plate shaft extensions, the first end of which is connected to an end part of the lock plate shaft 230, and the second end of which extends through the lock plates 228L and 228R to the covers 238L and 238R and is secured by stoppers 272L and 270R.

Lever guide grooves 234L, 234R that limit the movement of a lever guide shaft 230 are formed in the seat side frames 202L, 202R. In addition, guide grooves 242L, 242R that define the rotation angles of the seat back frames 204L, 204R are formed.

A lock plate pin guide groove 249 is formed in the lever 224, into which a lock plate pin 248L is inserted to guide the movements of the lock plates 228L, 228R. Similarly, a lock plate pin guide groove 262 is formed in the lever plate 260, into which the lock plate pin 248R is inserted to guide the movements of the lock plates 228L, 228R.

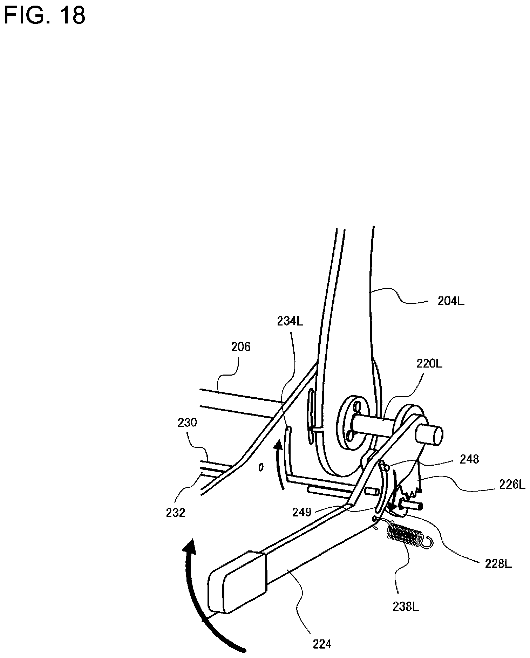

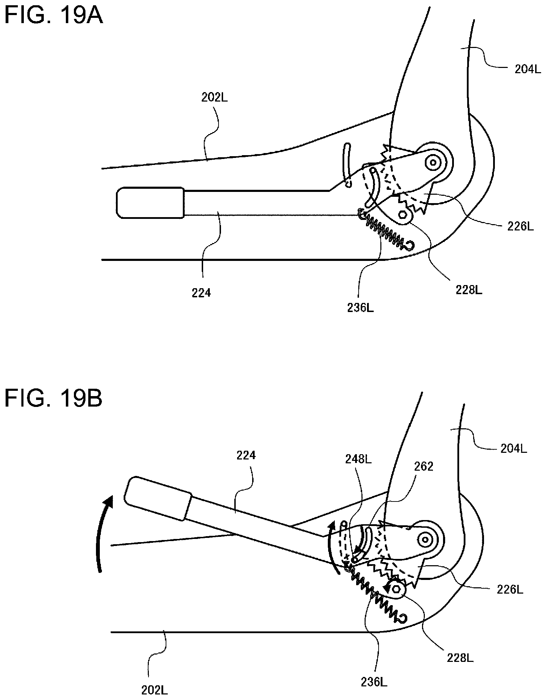

FIG. 18 is a perspective view depicting a reclining operation of the vehicle seat according to Embodiment 2 of the present invention. FIG. 19 is a side view depicting the reclining operation of a vehicle seat according to Embodiment 2 of the present invention, in which (A) depicts the locked state and (B) depicts the unlocked state.

As depicted in FIG. 19(A), in the seat of the present Embodiment, when the lever 224 is in a specified position (for example, horizontal), the gear mechanism 226L connected to the torsion bar 220L is engaged with the lock plate 228L, and therefore reclining is not possible.

On the other hand, as depicted in FIG. 18 and FIG. 19(B), when the lever 224 is pulled upward, the lock plate pin 248L moves along the lock plate pin guide 262, and the lock plate 228L rotates counterclockwise. As a result, the gear member 226L and the lock plate 228L are disengaged from each other, allowing the seat back 10 to be reclined. The mechanism on the right side of the seat also operates in sync with the left side.

The characteristics, functions and actions of the torsion bars 220L, 220R used in the present Embodiment are similar to those of the Embodiment 1 described above, so a duplicated description will be omitted.

While the present invention has been described with reference to the abovementioned illustrative embodiments, many equivalent changes and variations will be obvious to a person of ordinary skill in the art from the present disclosure. Therefore, the abovementioned illustrative embodiments of the present invention are presumably illustrative and not limiting. Without departing from the spirit and scope of the present invention, the described embodiments may take on various modifications.

**Claims**

1. A vehicle seat safety device that protects an occupant sitting in a vehicle seat having a reclining mechanism to enable adjusting the angle of the seat back, wherein:

   a seatbelt is configured to extend diagonally from an upper end part on a first side of the seat back in the width direction toward the lower end of a second side on the opposite side of the first side, and
   the seat back includes adjusting means at a rotation shaft part that is an axis for reclining by the seat back for varying the amount of rotation of the first side and the second side of the seat back.

2. The vehicle seat safety device according to claim 1, wherein the adjusting means includes a second torsion bar connected to at least the rotation shaft part on the second side of the seat back.

3. The vehicle seat safety device according to claim 2, wherein the adjusting means further includes a first torsion bar connected to the rotation shaft part on the first side of the seat back, and the torque characteristic T1 (N-m) relative to the displacement angle of the first torsion bar is set larger than the torque characteristic T2 (N-m) relative to the displacement angle of the second torsion bar.

4. The vehicle seat safety device according to claim 3, wherein the vehicle seat further comprises a seatbelt retractor for winding up the seatbelt.

5. The vehicle seat safety device according to claim 4, wherein the seatbelt retractor is arranged near an upper end of the first side of the seat back.

6. The vehicle seat safety device according to claim 5, wherein

   the seatbelt retractor includes a load limiter that limits the tension on the seatbelt,
   the load at which the load limiter activates is set to $F_L$, and the load limiter is configured such that the following formula holds when the distance from the center of the rotation shaft part to the upper end part of the seat back when viewing the seat from the side in the width direction is set to L and the difference of the torque characteristics T1 and T2 is set to $\Delta T_{barI\text{-}II}$.

   $$\Delta T_{barI\text{-}II} \fallingdotseq F_L \times L$$

7. The vehicle seat safety device according to claim 6, wherein the distance L is the distance from the center of the rotation shaft part to the belt pull-out portion of the retractor.

8. The vehicle seat safety device according to any one of claims 3 to 7, wherein the reclining mechanism includes a worm gear mechanism composed of a worm wheel connected to an end part of the first or second torsion bar on the opposite side of the seat back and a worm that meshes with the worm wheel.

9. The vehicle seat safety device according to any one of claims 3 to 7, wherein the reclining mechanism includes a gear mechanism connected to an end part of the first or second torsion bar on the opposite side of the seat back, a locking mechanism that limits rotation of the gear mechanism, and an adjustment member that releases the engagement of the gear mechanism and the locking mechanism to adjust the angle of the seat back frame.

FIG. 1A

FIG. 1B

FIG. 2A

FIG. 2B

FIG. 3A

FIG. 3B

FIG. 4

FIG. 5

## FIG. 6

# FIG. 7A

# FIG. 7B

FIG. 8

## FIG. 9A

## FIG. 9B

FIG. 10

FIG. 11A

FIG. 11B

## FIG. 12

FIG. 13A

FIG. 13B

## FIG. 14

FIG. 15

FIG. 16

FIG. 17

FIG. 18

FIG. 19A

FIG. 19B

## INTERNATIONAL SEARCH REPORT

| International application No. |
|---|
| **PCT/JP2023/010476** |

### A. CLASSIFICATION OF SUBJECT MATTER

***B60N 2/427***(2006.01)i; ***B60N 2/22***(2006.01)i
FI:    B60N2/427; B60N2/22

According to International Patent Classification (IPC) or to both national classification and IPC

### B. FIELDS SEARCHED

Minimum documentation searched (classification system followed by classification symbols)

B60N2/00-90

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2018-24309 A (TACHI S CO) 15 February 2018 (2018-02-15)  paragraphs [0015]-[0057], fig. 1-5 | 1 |
| Y | | 2 |
| A | | 3-9 |
| X | JP 4-303034 A (AISIN SEIKI CO LTD) 27 October 1992 (1992-10-27)  paragraphs [0007], [0011]-[0021], fig. 1-3 | 1 |
| Y | | 2 |
| A | | 3-9 |
| Y | JP 2022-77924 A (AUTOLIV DEV) 24 May 2022 (2022-05-24)  paragraph [0015] | 2 |
| A | JP 2014-156212 A (TOYOTA BOSHOKU CORP) 28 August 2014 (2014-08-28)  entire text, all drawings | 1-9 |
| A | JP 9-24756 A (BERUTORANDO FUOURE EKUITSUPUMENTSU SA) 28 January 1997 (1997-01-28)  entire text, all drawings | 1-9 |

☐ Further documents are listed in the continuation of Box C.        ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **17 May 2023** | **30 May 2023** |

| Name and mailing address of the ISA/JP | Authorized officer |
|---|---|
| **Japan Patent Office (ISA/JP)**  **3-4-3 Kasumigaseki, Chiyoda-ku, Tokyo 100-8915**  **Japan** | |
| | Telephone No. |

Form PCT/ISA/210 (second sheet) (January 2015)

**INTERNATIONAL SEARCH REPORT**
Information on patent family members

International application No.

**PCT/JP2023/010476**

| Patent document cited in search report | | | Publication date (day/month/year) | Patent family member(s) | | | Publication date (day/month/year) |
|---|---|---|---|---|---|---|---|
| JP | 2018-24309 | A | 15 February 2018 | (Family: none) | | | |
| JP | 4-303034 | A | 27 October 1992 | DE | 4209391 | A1 | |
| JP | 2022-77924 | A | 24 May 2022 | (Family: none) | | | |
| JP | 2014-156212 | A | 28 August 2014 | US | 2014/0232162 | A1 | |
| | | | | DE | 102014202562 | A1 | |
| | | | | CN | 103991398 | A | |
| JP | 9-24756 | A | 28 January 1997 | US | 5645316 | A | |
| | | | | EP | 756962 | A1 | |
| | | | | FR | 2736312 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2002283892 A